# EUROPÄISCHE PATENTSCHRIFT

(11) **EP 2 794 142 B1**
(45) Veröffentlichungstag und Bekanntmachung des Hinweises auf die Patenterteilung: **18.03.2015**
(21) Anmeldenummer: 12809744.1
(22) Anmeldetag: 17.12.2012
(51) Int. Cl.: B21D 28/10, B21D 28/34

(54) **MATRIZE EINER STANZVORRICHTUNG UND STANZVERFAHREN**
DIE FOR A PUNCHING DEVICE AND PUNCHING METHOD
MATRICE D'UN DISPOSITIF DE POINÇONNAGE ET PROCÉDÉ DE POINÇONNAGE

(30) Priorität: 22.12.2011 DE 102011089682
(43) Veröffentlichungstag der Anmeldung: 29.10.2014
(73) Patentinhaber: Pass Stanztechnik AG, 95473 Creussen (DE)
(72) Erfinder: KRAFT, Stefan, 91289 Schnabelwaid (DE)
(74) Vertreter: Rau, Schneck & Hübner Patentanwälte Rechtsanwälte PartGmbB
(86) Internationale Anmeldenummer: PCT/EP2012/075764
(87) Internationale Veröffentlichungsnummer: WO 2013/092476

(56) Entgegenhaltungen:
- EP-A1- 0 790 085
- EP-A1- 1 317 974
- JP-A- 6 297 053
- JP-A- 2003 230 920
- US-A- 5 400 682

## Beschreibung

Die Erfindung betrifft eine Matrize für eine Stanzvorrichtung. Ferner richtet sich die Erfindung auf ein Stanzwerkzeug für eine Stanzvorrichtung, das eine entsprechende Matrize umfasst. Die Erfindung ist auch auf ein Verfahren zum Herausschneiden von Werkstückteilen aus Werkstücken mit einer entsprechenden Matrize gerichtet.

Die EP 0 790 085 A1 beschreibt ein Schlitzwerkzeug zur Erzeugung eines kontinuierlichen Schlitzes in einem Werkstück, umfassend einen Stempel und eine Matrize. Die EP 1 317 974 A1 beschreibt ebenfalls ein Schlitzwerkzeug.

Die US 5,400,682 beschreibt ein Schneidwerkzeug mit mehreren Stempeln. Die JP 2003 230920 A beschreibt ein Schneidwerkzeug. Die JP 6 297053 A beschreibt ein Schneidwerkzeug.

Aus dem Stand der Technik sind bereits durch offenkundige Vorbenutzung Stanzvorrichtungen bekannt, deren Stempel und Matrizen Werkstücke fortschreitend ritzen bzw. schneiden können. Aus dem jeweiligen Werkstück herausgebogene Werkstückteile werden endseitig durch Ablänghübe abgelängt, wodurch in dem Werkstück Öffnungen entstehen. Das Ablängen erfolgt gemeinsam durch die Matrize und den Stempel. Nachteilig an diesen bekannten Stanzvorrichtungen ist, dass sich abgelängte Endstücke von dem Werkstückteil oftmals in der Matrize verklemmen, was zu einer Beschädigung bzw. zu einem Stillstand der gesamten Stanzvorrichtung führen kann.

Der Erfindung liegt daher die Aufgabe zugrunde, eine Matrize für eine Stanzvorrichtung bereitzustellen, die äußerst einfach ausgebildet und ferner äußerst funktionssicher ist. Ein entsprechendes Stanzwerkzeug soll ebenfalls geschaffen werden. Ferner soll auch ein entsprechendes Stanzverfahren geliefert werden. Werkstücke mit ansatzfreien Kanten, insbesondere Blechkanten, sollen außerdem äußerst einfach erzeugbar sein.

Diese Aufgabe wird erfindungsgemäß durch die in den unabhängigen Ansprüchen 1, 11 und 14 angegebenen Merkmale gelöst. Der Kern der Erfindung liegt darin, dass die Matrize selbst eine funktionsfähige Ablängeinrichtung zum Ablängen eines Werkstückteils des Werkstücks hat. Durch die Ablängeinrichtung ist das Werkstückteil ablängbar bzw. kürzbar. Die Relativverlagerung zwischen dem Ablängelement und dem Gegen-Ablängelement ist durch eine Bewegung des Ablängelements und/oder des Gegen-Ablängelements herbeiführbar. Entsprechende, bekannte Antriebe sind dafür einsetzbar.

Das Werkstückteil wird aus dem eigentlichen Werkstück für das Ablängen in die Matrize gebogen. Das Werkstückteil bleibt mit einem Anschluss-Endstück des Werkstückteils mit dem eigentlichen Werkstück in Verbindung. Unter dem Anschluss-Endstück wird das Endstück des Werkstückteils verstanden, das mit dem eigentlichen Werkstück beim Ablängen in fester Verbindung steht.

Die Fühningseinrichtung erlaubt vorzugsweise eine sichere Fühning des Werkstückteils zu der Ablängeinrichtung und/oder eine sichere Anführung des freien Werkstückteils aus der Matrize.

Weitere vorteilhafte Ausgestaltungen der Erfindung sind in den Unteransprüchen angegeben.

Die in Anspruch 2 angegebene Relativbewegung zwischen dem Werkstück-Tragkörper und dem Matrizen-Grundkörper ist beispielsweise durch eine Bewegung des Werkstück-Tragkörpers und/oder des Matrizen-Grundkörpers herbeiführbar. Vorteilhafterweise erfolgt eine Bewegung des Werkstück-Tragkörpers relativ zu dem Matrizen-Grundkörper. Günstigerweise ist der Werkstück-Tragkörper durch einen Stempel der Stanzvorrichtung betätigbar.

Gemäß Anspruch 3 ist das Ablängelement an dem Matrizen-Grundkörper angeordnet. Es ist vorzugsweise als separates Bauteil ausgeführt. Es ist zweckmäßig, wenn das Ablängelement auswechselbar ist. Alternativ ist das Ablängelement einteilig mit dem Matrizen-Grundkörper ausgebildet.

Gemäß Anspruch 4 ist das Gegen-Ablängelement an dem Werkstück-Tragkörper angeordnet. Es ist von Vorteil, wenn das Gegen-Ablängelement als separates Bauteil ausgebildet ist. Günstigerweise ist das Gegen-Ablängelement auswechselbar. Alternativ ist das Gegen-Ablängelement einteilig mit dem Werkstück-Tragkörper ausgebildet. Eine umgekehrte Anordnung von Ablängelement und Gegen-Ablängelement ist möglich.

Das mindestens eine Federelement nach Anspruch 5 ist vorzugsweise als Schraubenfeder ausgeführt. Es kann beispielsweise aber auch als Tellerfeder oder elastischer Materialblock ausgebildet sein. Es ist von Vorteil, wenn das Federelement ein Druckfederelement ist. Der Werkstück-Tragkörper und der Matrizen-Grundkörper sind nach Anspruch 5 entgegen der Federwirkung des Federelements in ihre Ablängstellung bringbar. Eine Ausgestaltung als Zugfederelement ist alternativ bei geändertem Aufbau der Matrize möglich.

Die Durchtrittsöffnung nach Anspruch 6 ist vorzugsweise umfangsseitig geschlossen. Sie erlaubt eine einfache Fühning des Werkstückteils durch den Werkstück-Tragkörper bzw. in die Matrize.

Durch die fluchtende Anordnung der Durchtrittsöffnung und der ersten Abführöffnung nach Anspruch 6 ist eine problemlose und verklemmfreie Abführung des freien Werkstückteils bzw. eines freien Anschluss-Endstücks des Werkstückteils am Ende des Ablängvorgangs möglich.

Die Fühningsschräge nach Anspruch 7 erlaubt eine besonders sichere Führung des Werkstückteils zu der Ablängeinrichtung. Die Fühningsschräge ist vorzugsweise direkt an dem Werkstück-Tragkörper oder an einem mit dem Werkstück-Tragkörper in fester Verbindung stehenden Bauteil vorgesehen.

Die Abführschräge nach Anspruch 8 ermöglicht eine besonders sichere Abführung des freien Werkstückteils aus der Matrize. Sie ist vorzugsweise direkt an dem Matrizen-Grundkörper oder an einem mit dem Matrizen-Grundkörper in fester Verbindung stehenden Bauteil vorgesehen. Die Abführschräge erlaubt vorzugsweise auch eine besonders sichere Fühning des Werkstückteils zu der Ablängeinrichtung

Das Einführelement nach Anspruch 9 ermöglicht eine äußerst funktionssichere Fühning des Werkstückteils zu der Abführeinrichtung. Das Einführelement ist vorzugsweise als separates Bauteil oder direkt an dem Werkstück-Tragkörper vorgesehen. Es ist von Vorteil, wenn die Einführrampe mit der Fühningsschräge fluchtet.

Da nach Anspruch 9 vorzugsweise auf das Einführelement auch mindestens ein Federelement wirkt, ist eine Versetzung des Einführelements durch das Werkstückteil möglich. Eine besonders funktionssichere Führung des Werkstückteils zu der Ablängeinrichtung ist so möglich. Es ist von Vorteil, wenn das Federelement als Schraubenfeder ausgeführt ist. Eine andere Ausgestaltung, wie als Tellerfeder oder als elastischer Materialblock, ist alternativ möglich. Es ist zweckmäßig, wenn das Federelement ein Druckfederelement ist.

Es ist von Vorteil, wenn das Einführelement an bzw. in dem Werkstück-Tragkörper geführt ist. Vorzugsweise ist das Einführelement gegenüber dem Werkstück-Tragkörper durch mindestens ein Vorspannelement vorgespannt.

Die zweite Abführöffnung nach Anspruch 10 erlaubt eine einfache und verklemmfreie Abführung abgelängter, freier Endstücke des Werkstückteils aus der Matrize.

Der Federkörper nach Anspruch 12 ist vorzugsweise als Schraubenfeder ausgebildet. Alternativ ist dieser als Tellerfeder oder elastischer Materialblock ausgeführt. Der Federkörper ist vorzugsweise ein Druckfederkörper, der das Bodenelement und den Stempelkörper voneinander wegdrückt bzw. entsprechend beaufschlagt.

Die Trapezform des Stempeldorns nach Anspruch 13 erlaubt eine besonders gute und exakte Erzeugung von Innenausschnitten bzw. inneren Aussparungen an dem Werkstück. Der Stempeldorn hat eine vordere Schneidkante und eine hintere Kante, die parallel zu der Schneidkante verläuft. Die Schneidkante ist in einer Vorschubrichtung eines Werkstücks vor der hinteren Kante angeordnet. Zwischen der Schneidkante und der hinteren Kante verlaufen Schrägkanten. Die Schneidkante ist länger als die hintere Kante. Die Schrägkanten laufen so von der Schneidkante zu der hinteren Kante aufeinander zu.

Es ist von Vorteil, wenn an dem Stempel bzw. an dessen Stempeldorn ferner mindestens eine nach unten vorspringende, freie Hinterführung angeordnet ist, die günstigerweise stiftartig und beispielsweise im Querschnitt rechteckig ist. Durch die Hinterführung sind auf einfache Art und Weise Querkräfte an dem Werkzeug aufnehmbar. Das Werkzeug kann so seitlich nicht weg. Es ist dann quasi fixiert.

Der Federkörper nach Anspruch 15 ist vorzugsweise als Schraubenfeder ausgebildet. Alternativ ist dieser als Tellerfeder oder elastischer Materialblock ausgeführt. Der Federkörper ist vorzugsweise ein Druckfederkörper, der das Bodenelement und den Stempelkörper voneinander wegdrückt bzw. entsprechend beaufschlagt.

Nachfolgend werden unter Bezugnahme auf die beigefügte Zeichnung zwei bevorzugte Ausführungsformen der Erfindung beispielhaft beschrieben. Dabei zeigen:
- Fig. 1: eine schematische Ansicht einer Stanzvorrichtung mit einem erfindungsgemäßen Stanzwerkzeug,
- Fig. 2: eine schematische Schnittansicht des in Fig. 1 gezeigten Stanzwerkzeugs, das sich in seiner Ruhestellung befindet,
- Fig. 3: eine schematische Schnittansicht des Stanzwerkzeugs, das sich in einer ersten Schneidstellung befindet,
- Fig. 4: eine schematische Schnittansicht des Stanzwerkzeugs, die das Werkstück in einer auf die Ablängeinrichtung hin verrückten Stellung zeigt,
- Fig. 5: eine schematische Schnittansicht des Stanzwerkzeugs, bei der sich das Stanzwerkzeug in einer zweiten Schneidstellung befindet,
- Fig. 6: eine schematische Schnittansicht des Stanzwerkzeugs, bei der das Werkstück weiter in Richtung auf die Ablängeinrichtung verrückt dargestellt ist und in die offene Ablängeinrichtung ragt,
- Fig. 7: eine schematische Schnittansicht des Stanzwerkzeugs, die einen ersten Ablänghub des Stanzwerkzeugs zeigt,
- Fig. 8: eine schematische Schnittansicht des Stanzwerkzeugs, die das Stanzwerkzeug in einer dritten Schneidstellung zeigt,
- Fig. 9: eine schematische Schnittansicht des Stanzwerkzeugs, bei der das Werkstück weiter in Richtung auf die Ablängeinrichtung verrückt dargestellt ist,
- Fig. 10: eine schematische Schnittansicht des Stanzwerkzeugs, die einen weiteren Schneid- und Ablänghub des Stanzwerkzeugs zeigt,
- Fig. 11: eine schematische Schnittansicht des Stanzwerkzeugs, bei der das Werkstück weiter in Richtung auf die Ablängeinrichtung verrückt dargestellt ist,
- Fig. 12: eine schematische Schnittansicht des Stanzwerkzeugs, die einen Endschneidhub des Stanzwerkzeugs zeigt,
- Fig. 13: eine schematische Schnittansicht des Stanzwerkzeugs, die eine Abführung des freien Werkstückteils und eines freien Endstücks des Werkstückteils zeigt, und
- Fig. 14: eine der Fig. 2 entsprechende Schnittansicht eines erfindungsgemäßen Stanzwerkzeugs gemäß einer zweiten bevorzugten Ausführungsform der Erfindung.

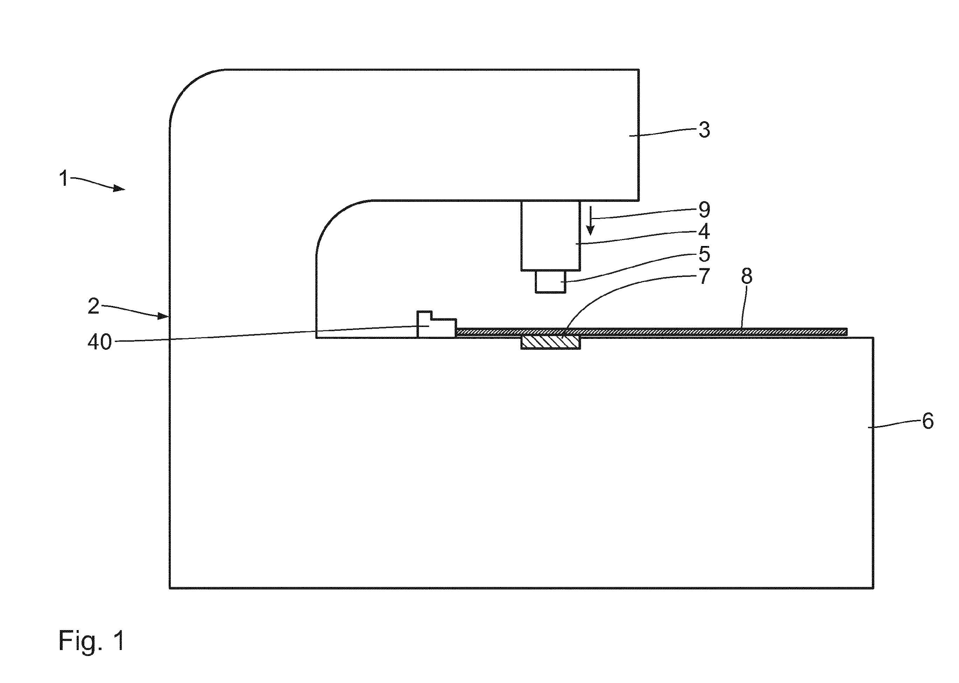

Eine in Fig. 1 in ihrer Gesamtheit gezeigte Stanzvorrichtung 1 umfasst ein Gestell 2, an dessen oberen Gestellteil 3 ein Betätigungsstößel 4 angebracht ist. Unter dem Betätigungsstößel 4 ist ein Stempel 5 angeordnet. An dem unteren Gestellteil 6 des Gestells 2 befindet sich eine Matrize 7. Der Stempel 5 und die Matrize 7 bilden zusammen ein Stanzwerkzeug.

Zwischen dem Stempel 5 und der Matrize 7 liegt ein zu bearbeitendes Werkstück 8, das hier ein Metallblech ist. Der Stempel 5 ist in einer Stanzrichtung 9 in Richtung auf die Matrize 7 bzw. das Werkstück 8 beweglich. Gemäß Fig. 1 ist die Stanzrichtung 9 vertikal nach unten gerichtet.

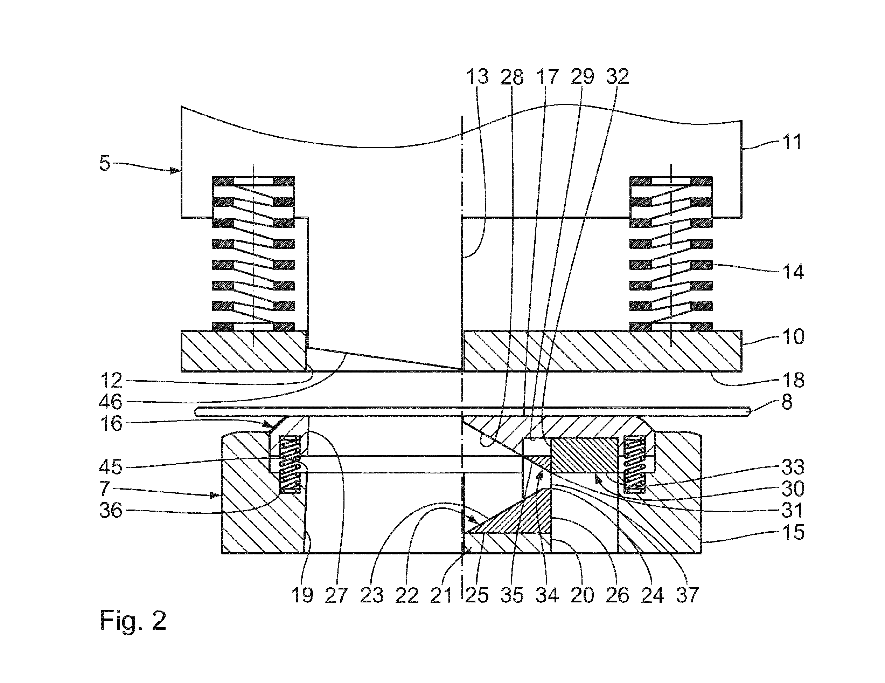

Nachfolgend wird unter Bezugnahme auf die Fig. 2 bis 13 eine erste Ausführungsform des Stanzwerkzeugs beschrieben.

Der Stempel 5 umfasst eine Bodenplatte 10 und einen Stempelkörper 11. Die Bodenplatte 10 hat eine dem Werkstück 8 zugewandte Anlagefläche 18, die sich senkrecht zu der Stanzrichtung 9 erstreckt. In der Bodenplatte 10 ist eine Stempeldorn-Öffnung 12 ausgebildet, die vorzugsweise umfangsseitig geschlossen ist.

Von dem Stempelkörper 11 springt ein Stempeldorn 13 in Richtung auf das Werkstück 8 bzw. die Matrize 7 in der Stanzrichtung 9 vor. Der Stempeldorn 13 ist vorzugsweise im Querschnitt rechteckig und hat eine Stempelfläche 46, die der Matrize 7 zugewandt ist und schräg zu dem Werkstück 8 verläuft. Die Stempeldorn-Öffnung 12 ist an den Querschnitt des Stempeldorns 13 angepasst. Die Bodenplatte 10 bildet vorzugsweise auch einen Abstreifer für den Stempeldorn 13.

Zwischen dem Stempelkörper 11 und der Bodenplatte 10 sind mehrere komprimierbare, erste Schraubendruckfedern 14 angeordnet, die den Stempelkörper 11 und die Bodenplatte 10 voneinander wegdrücken, wenn die Bodenplatte 10 frei ist. Die Schraubendruckfedern 14 bilden Federkörper.

Die Matrize 7 wiederum umfasst einen Matrizen-Grundkörper 15 und einen Werkstück-Tragkörper 16, der eine ebene Tragfläche 17 zum Tragen des Werkstücks 8 hat. Die Tragfläche 17 erstreckt sich parallel zu der Anlagefläche 18.

Der Matrizen-Grundkörper 15 ist von einer ersten Abführöffnung 19 durchsetzt, die fluchtend zu der Stempeldorn-Öffnung 12 angeordnet ist. Es ist von Vorteil, wenn der Querschnitt der ersten Abführöffnung 19 im Wesentlichen dem Querschnitt der Stempeldorn-Öffnung 12 entspricht.

Ferner ist in dem Matrizen-Grundkörper 15 eine zweite Abführöffnung 20 ausgebildet, die sich seitlich neben der ersten Abführöffnung 19 und parallel zu dieser erstreckt.

Zwischen der ersten Abführöffnung 19 und der zweiten Abführöffnung 20 erstreckt sich eine Trennwand 21, die die Abführöffnungen 19, 20 voneinander trennt. Die Trennwand 21 ist Bestandteil des Matrizen-Grundkörpers 15 und weist gegenüber dem eigentlichen Matrizen-Grundkörper 15 eine reduzierte Höhe auf.

Auf der Trennwand 21 sitzt ein Ablängelement 22, das eine der ersten Abführöffnung 19 bzw. der Stempeldorn-Öffnung 12 zugewandte Abführschräge 23 aufweist. Stromabwärts zu der Abführschräge 23 hat das Ablängelement 22 eine freie Ablängkante 24, die vorzugsweise durch einen rechten Winkel an dem Ablängelement 22 gebildet ist. Das Ablängelement 22 hat ferner eine der Abführschräge 23 gegenüberliegende Bodenseite 25, die sich an die Trennwand 21 anschließt. Die sich zwischen der Ablängkante 24 und der Bodenseite 25 erstreckende freie Seite 26 begrenzt die zweite Abführöffnung 20 zu der ersten Abführöffnung 19 hin. Die freie Seite 26 erstreckt sich senkrecht zu der Bodenseite 25. Das Ablängelement 22 ist im Querschnitt im Wesentlichen ein rechtwinkliger Dreieckskörper.

Der Werkstück-Tragkörper 16 hat eine Durchtrittsöffnung 27, die von der Tragfläche 17 ausgeht. Die Durchtrittsöffnung 27 fluchtet im Wesentlichen mit der Stempeldorn-Öffnung 12 und der ersten Abführöffnung 19. An die Durchtrittsöffnung 27 schließt sich eine Führungsschräge 28 an, die im Wesentlichen gegenüberliegend zu der Abführschräge 23 vorgesehen ist.

An dem Werkstück-Tragkörper 16 ist an dessen der Tragfläche 17 abgewandten Unterseite 29 ein Gegen-Ablängelement 30 angeordnet, das im Querschnitt vorzugsweise quaderförmig ist. Das Gegen-Ablängelement 30 begrenzt vorzugsweise die zweite Abführöffnung 20 zumindest teilweise nach oben. Das Gegen-Ablängelement 30 hat eine freie Gegen-Ablängkante 31, die zum Wechselwirken mit der Ablängkante 24 des Ablängelements 22 ausgebildet und entsprechend angeordnet ist. Die Gegen-Ablängkante 31 ist durch eine von der Unterseite 29 weg verlaufende Seitenfläche 32 und eine sich an diese anschließende Kopffläche 33 des Gegen-Ablängelements 30 gebildet, die die zweite Abführöffnung 20 zu dem Werkstück-Tragkörper 16 hin begrenzt bzw. parallel zu der Tragfläche 17 verläuft.

Das Gegen-Ablängelement 30 und das Ablängelement 22 sind derart angeordnet, dass die Seitenfläche 32 und die freie Seite 26 geringfügig seitlich zueinander versetzt sind. Die Seitenfläche 32 und die freie Seite 26 verlaufen vorzugsweise im Wesentlichen parallel zueinander. Das Ablängelement 22 und das Gegen-Ablängelement 30 bilden zusammen eine Ablängeinrichtung. Die Ablängeinrichtung ist in ihrer Gesamtheit benachbart zu genau einer Seite des Werkstücks 8 angeordnet.

Zwischen dem Gegen-Ablängelement 30 und der Führungsschräge 28 ist günstigerweise ein Einführelement 34 angeordnet. Das Einführelement 34 ist direkt an dem Werkstück-Tragkörper 16 oder indirekt an dem Werkstück-Tragkörper 16 gegenüberliegend zu dem Ablängelement 22 gelagert. Es hat eine schräge Einführrampe 35, die die Führungsschräge 28 im Wesentlichen in Richtung auf das Gegen-Ablängelement 30 verlängert und an der Gegen-Ablängkante 31 endet. Das Einführelement 34 ist im Querschnitt als rechtwinkliges Dreieck ausgebildet, wobei die Einführrampe 35 dem Ablängelement 22 zugewandt ist.

Die Abführschräge 23, die Einführrampe 35 und die Führungsschräge 28 bilden zusammen eine Führungseinrichtung mit einem sich in Richtung auf die zweite Abführöffnung 20 bzw. die Ablängeinrichtung verjüngenden Führungstrichter.

Zwischen dem Matrizen-Grundkörper 15 und dem Werkstück-Tragkörper 16 sind mehrere komprimierbare, zweite Schraubendruckfedern 36 angeordnet, die den Werkstück-Tragkörper 16 von dem Matrizen-Grundkörper 15 wegdrücken bzw. in Richtung auf den Stempel 5 drücken. Die Schraubendruckfedern 36 bilden Federelemente.

Die Anfangsfederkraft der Schraubendruckfedern 14 ist größer als die maximale Federkraft der Schraubendruckfedern 36. Die Anfangsfederkraft der Schraubendruckfedern 14 ist größer als die zum Stanzen eines Werkstückteils 38 des Werkstücks 8 in der Ablängeinrichtung erforderliche Stanzkraft. Die Anfangsfederkraft der Schraubendruckfedern 36 ist größer als die Gewichtskraft des Werkstücks 8.

Nachfolgend wird das Stanzwerkzeug im Stanzeinsatz näher beschrieben. Dabei wird von Fig. 2 ausgegangen, die eine Ruhestellung des Stanzwerkzeugs zeigt.

Gemäß Fig. 2 liegt das zu bearbeitende Werkstück 8 auf der Tragfläche 17 des Werkstück-Tragkörpers 16 flächig auf. Die Anlagefläche 18 ist entgegen der Stanzrichtung 9 beabstandet zu dem Werkstück 8.

Die Ablängeinrichtung befindet sich in ihrer Offenstellung. Das Ablängelement 22 und das Gegen-Ablängelement 30 sind also beabstandet zueinander angeordnet. Die freie Seite 26 und die Seitenfläche 32 fluchten im Wesentlichen miteinander. Zwischen der Ablängkante 24 und der Gegen-Ablängkante 31 liegt ein Ablängspalt 37 vor, der eine Durchtrittsverbindung zwischen der zweiten Abführöffnung 20 und dem Führungstrichter bzw. der ersten Abführöffnung 19 herstellt. Der Ablängspalt 37 hat eine Höhe, die größer als die Dicke des zu bearbeitenden Werkstücks 8 ist. Zur Bildung des Ablängspalts 37 befindet sich der Werkstück-Tragkörper 16 in seiner oberen Stellung; er ist also beabstandet zu einer dem Werkstück-Tragkörper 16 zugewandten Anschlagsfläche 45 des Matrizen-Grundkörpers 15 angeordnet, die senkrecht zu der Stanzrichtung 9 verläuft. Dies wird durch die Schraubendruckfedern 36 erreicht.

Der Stempelkörper 11 befindet sich in seiner oberen Ruhestellung, in der er einen maximalen Abstand in der Stanzrichtung 9 zu der Bodenplatte 10 hat.

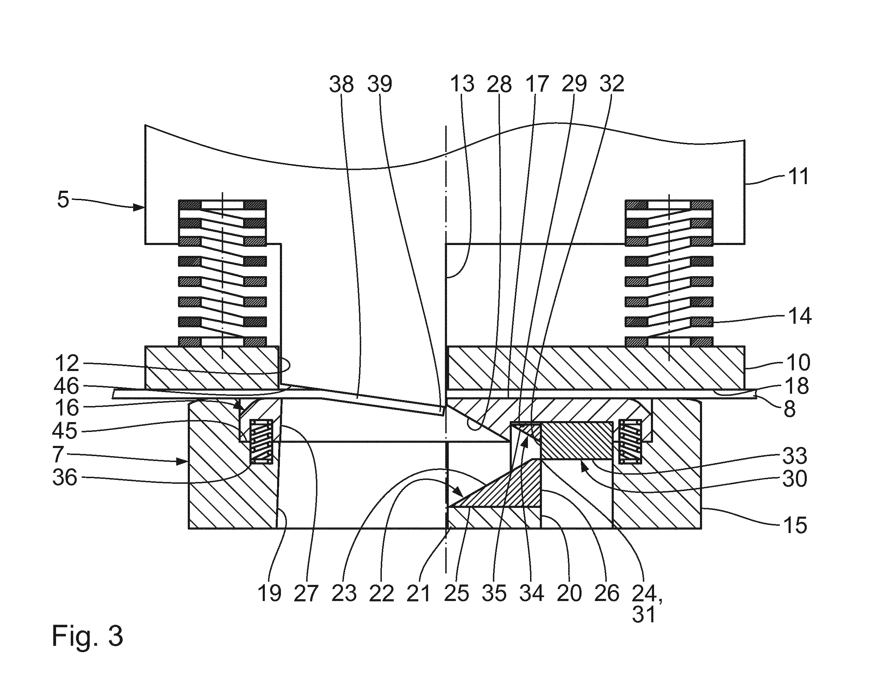

Das Stanzwerkzeug wird dann in seine erste Schneidstellung überführt, die in Fig. 3 dargestellt ist. Zum Erreichen der ersten Schneidstellung wird auf den Stempelkörper 11 durch den Betätigungsstößel 4 eine in Richtung auf das Werkstück 8 bzw. in der Stanzrichtung 9 gerichtete Druckkraft ausgeübt, so dass sich der Stempelkörper 11 der Bodenplatte 10 nähert. Dabei werden die Schraubendruckfedern 14 komprimiert und der Stempeldorn 13 durchsetzt zumindest teilweise die Stempeldorn-Öffnung 12. Der Stempeldorn 13 dringt teilweise durch das Werkstück 8 hindurch und ragt in die Durchtrittsöffnung 27 hinein. Der Stempelkörper 11 befindet sich in seiner unteren Schneidstellung.

Wie bereits erwähnt, verläuft die Stempelfläche 46 schräg. Der Stempeldorn 13 hat an dem der Ablängeinrichtung zugewandten Seitenbereich eine größere Länge als an dem der Ablängeinrichtung abgewandten Seitenbereich. Er dringt mit dem der der Ablängeinrichtung zugewandten Seitenbereich in das Werkstück 8 ein, während der andere Seitenbereich des Stempelsdorns 13 nicht in das Werkstück 8 eindringt bzw. beabstandet zu dem Werkstück 8 bleibt.

Durch den schrägen Verlauf der Stempelfläche 46 und die beschriebene Betätigung des Stempels 5 wird aus dem Werkstück 8 das Werkstückteil 38 derart geschnitten, dass es mit dem restlichen Werkstück 8 über ein Anschluss-Endstück in fester Verbindung bleibt. Die Verbindung des Werkstückteils 38 mit dem restlichen Werkstück 8 bzw. das Anschluss-Endstück befindet sich in dem Werkstück 8 entgegengesetzt zu der Ablängeinrichtung. Das Werkstückteil 38 ist gemäß dieser Ausführungsform im Wesentlichen rechteckförmig, wobei es an drei zusammenhängenden Seiten aus dem restlichen Werkstück 8 frei geschnitten worden ist. Es hat ein Endstück 39, das gegenüberliegend zu dem Anschluss-Endstück ist und der Ablängeinrichtung zugewandt ist. Das Stanzwerkzeug hat einen Schneidhub durchgeführt, wobei der Stempeldorn 13 axial versetzt worden ist.

Durch den Stempeldorn 13 wird das Werkstückteil 38 ferner in die Durchtrittsöffnung 27 gebogen.

Die Ablängeinrichtung befindet sich in ihrer Ablängstellung, wobei dies keinen Einfluss auf das Werkstückteil 38 hat. Das Werkstückteil 38 ist nämlich beabstandet zu der Ablängeinrichtung. In der Ablängstellung ist der Ablängspalt 37 geschlossen.

Die Bodenplatte 10 liegt dann an dem Werkstück 8 gegenüberliegend zu der Matrize 7 an.

Der Werkstück-Tragkörper 16 hat sich dem eigentlichen Matrizen-Grundkörper 15 angenähert. Er liegt an der Anschlagsfläche 45 an. Der

Werkstück-Tragkörper 16 wird durch den Matrizen-Grundkörper 15 geführt.

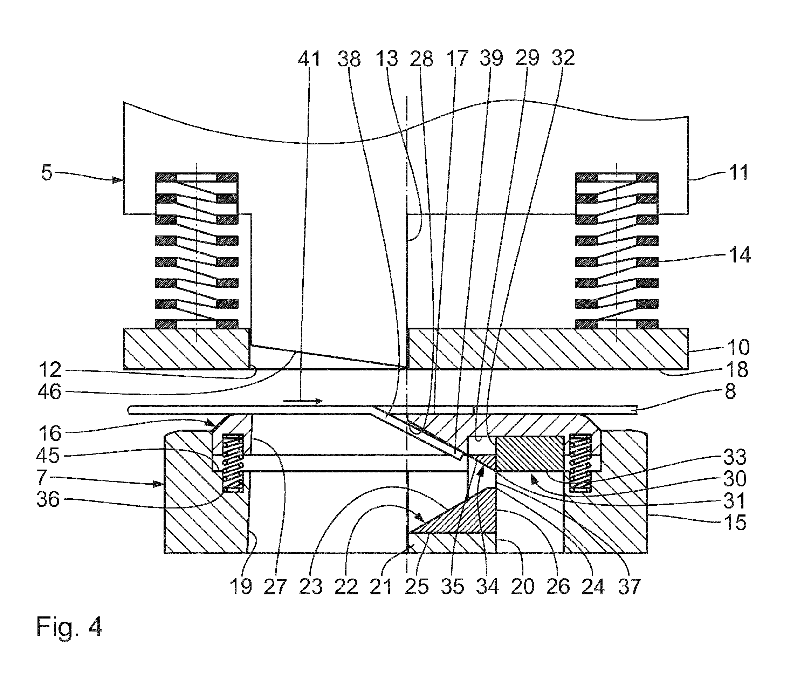

Bezugnehmend auf Fig. 4 befindet sich der Stempelkörper 11 mit seinem Stempeldorn 13 wieder in seiner oberen Ruhestellung. Er ist entgegen der Stanzrichtung 9 bewegt worden. Die Bodenplatte 10 ist hier wieder beabstandet zu dem Werkstück 8.

Der Werkstück-Tragkörper 16 befindet sich in seiner oberen Stellung. Er ist durch die Schraubendruckfedern 36 nach oben gedrückt worden.

Das Werkstück 8 ist über eine Vorschubeinrichtung 40 (Fig. 1) derart in einer Vorschubrichtung 41 auf die Ablängeinrichtung verlagert worden, dass auch das Endstück 39 über die Führungsschräge 28 in Richtung auf die Ablängeinrichtung verschoben worden ist. Das Werkstückteil 38 gleitet dabei an der Führungsschräge 28. Das Endstück 39 befindet sich beabstandet zu dem Ablängspalt 37.

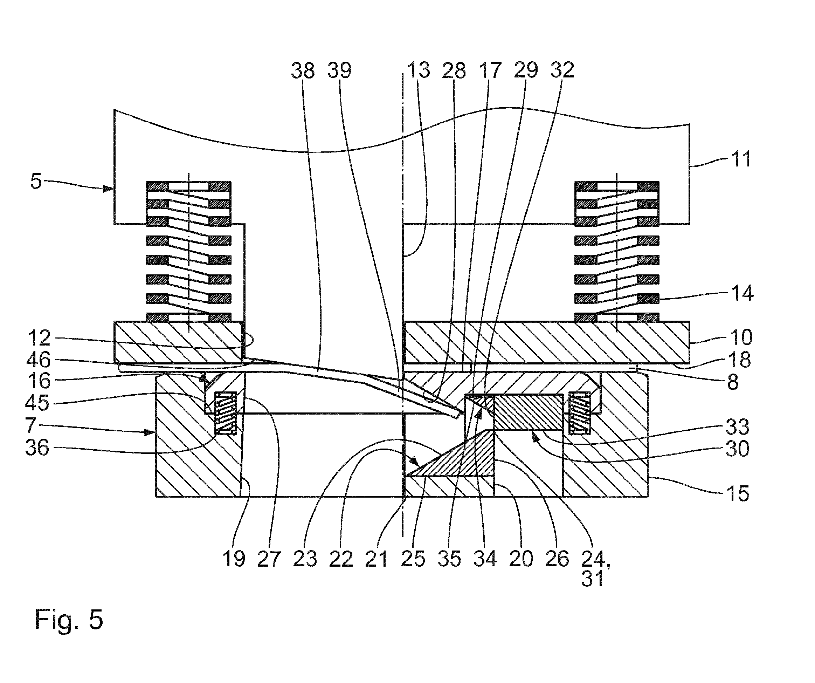

In Fig. 5 ist die zweite Schneidstellung des Stanzwerkzeugs gezeigt, die im Wesentlichen der ersten Schneidstellung gleicht.

Der Stempeldorn 13 setzt das Schneiden des Werkstücks 8 entsprechend der ersten Schneidstellung fort, so dass das Werkstückteil 38 im Wesentlichen verlängert wird. Die Anschlussverbindung zwischen dem Werkstückteil 38 und dem eigentlichen Werkstück 8 wird quasi verschoben. Die Ablängeinrichtung ist weiter quasi ohne Funktion.

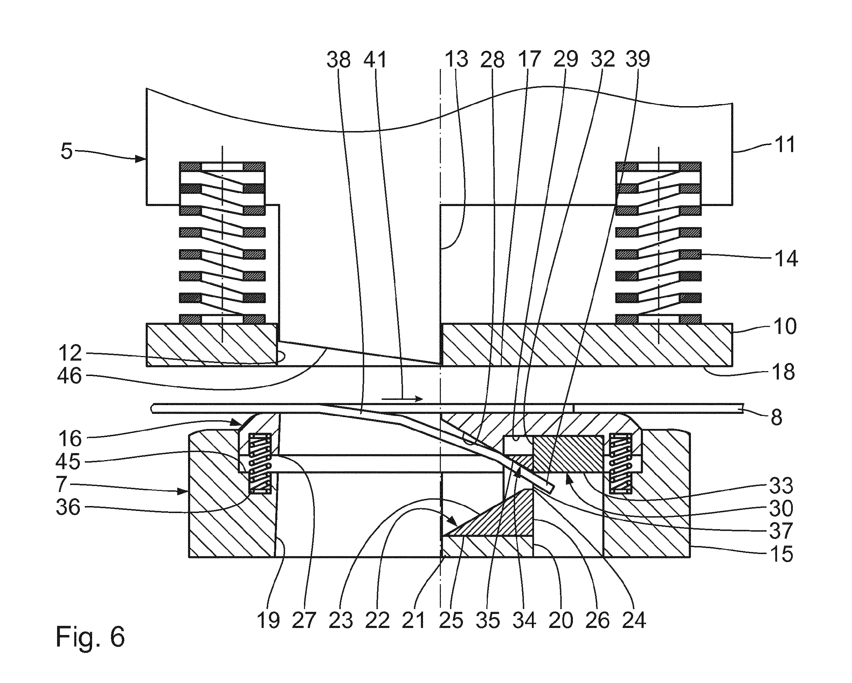

Bezugnehmend auf Fig. 6 befindet sich der Stempelkörper 11 mit seinem Stempeldorn 13 wieder in seiner oberen Ruhestellung.

Das Werkstück 8 ist durch die Vorschubeinrichtung 40 weiter in der Vorschubrichtung 41 verschoben worden. Es ist dabei an der Einführrampe 35 entlang geglitten. Das Endstück 39 durchsetzt den Ablängspalt 37 und befindet sich in der zweiten Abführöffnung 20 bzw. in der offenen Ablängeinrichtung.

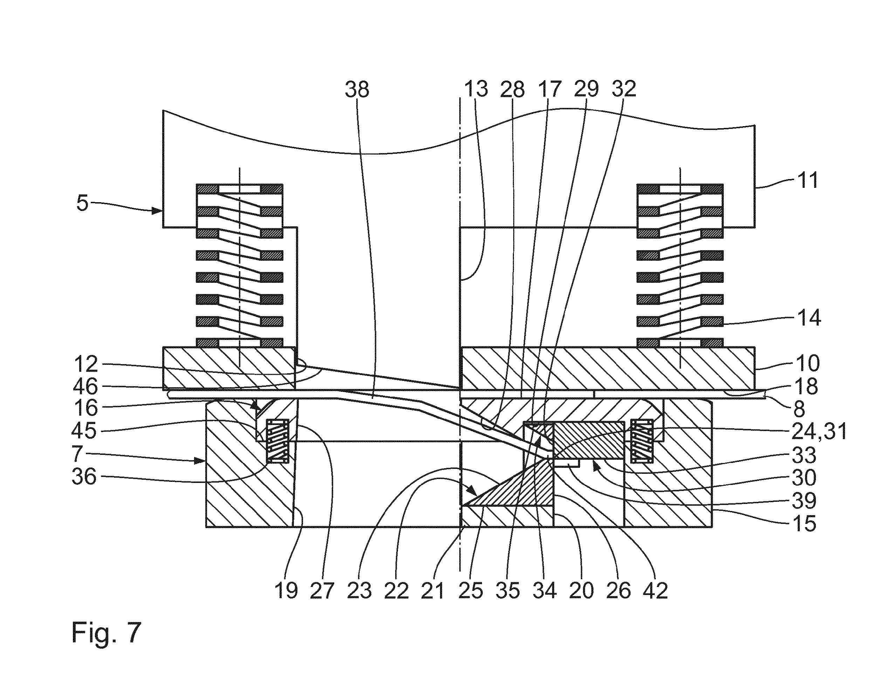

Bezugnehmend auf Fig. 7 führt das Stanzwerkzeug einen ersten Ablänghub aus, bei dem der Stempelkörper 11 in Richtung auf die Bodenplatte 10 verfahren wird. Der Ablänghub ist kleiner als die Schneidhübe, so dass der Stempeldorn 13 beabstandet zu dem Werkstück 8 bzw. zu dem Werkstückteil 38 bleibt.

Der Werkstück-Tragkörper 16 ist in Richtung auf den Matrizen-Grundkörper 15 verlagert worden. Er liegt an der Anschlagsfläche 45 an. Die Schraubendruckfedern 14 übertragen die Schneidkraft auf die Ablängeinrichtung, bis der Werkstück-Tragkörper 16 an der Anschlagsfläche 45 anliegt.

Die Ablängkante 24 und die Gegen-Ablängkante 31 wirken ablängend zusammen, so dass das in die zweite Abführöffnung 20 ragende Endstück 39 gekappt bzw. abgeschnitten wird. Die Ablängeinrichtung befindet sich in ihrer Ablängstellung. Der Ablängspalt 37 ist geschlossen. Das Werkstückteil 38 hat nun ein neues Endstück 42.

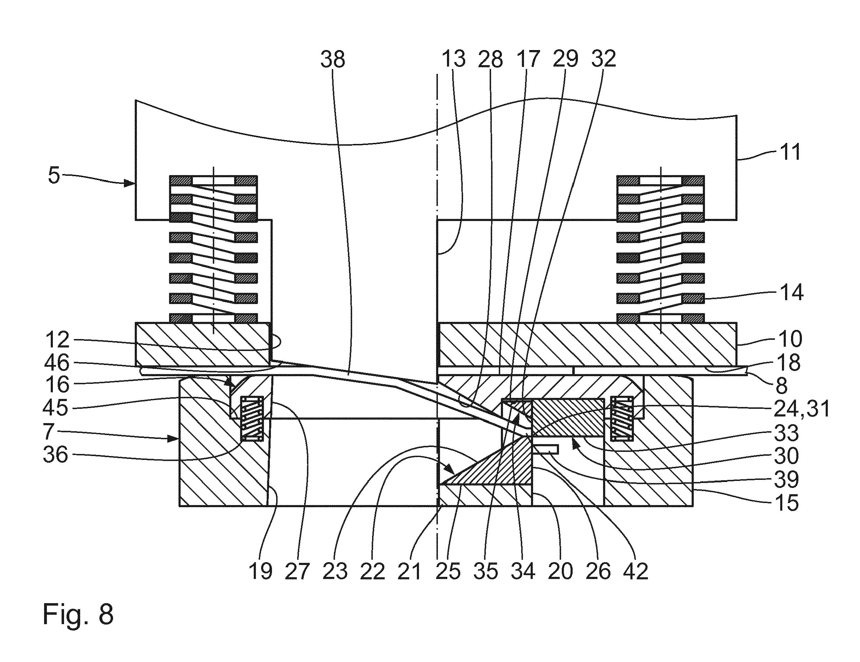

In Fig. 8 befindet sich das Stanzwerkzeug in seiner dritten Schneidstellung, die im Wesentlichen der ersten und zweiten Schneidstellung entspricht. Das Werkstückteil 38 wird weiter seitlich frei geschnitten. Das freie Endstück 39 wird über die zweite Abführöffnung 20 abgeführt. Verglichen mit Fig. 7, sind hier die Schraubenfedern 14 weiter zusammengedrückt worden, da die Bodenplatte 10 über das Werkstück 8 auf den Matrizen-Grundkörper 15 drückt.

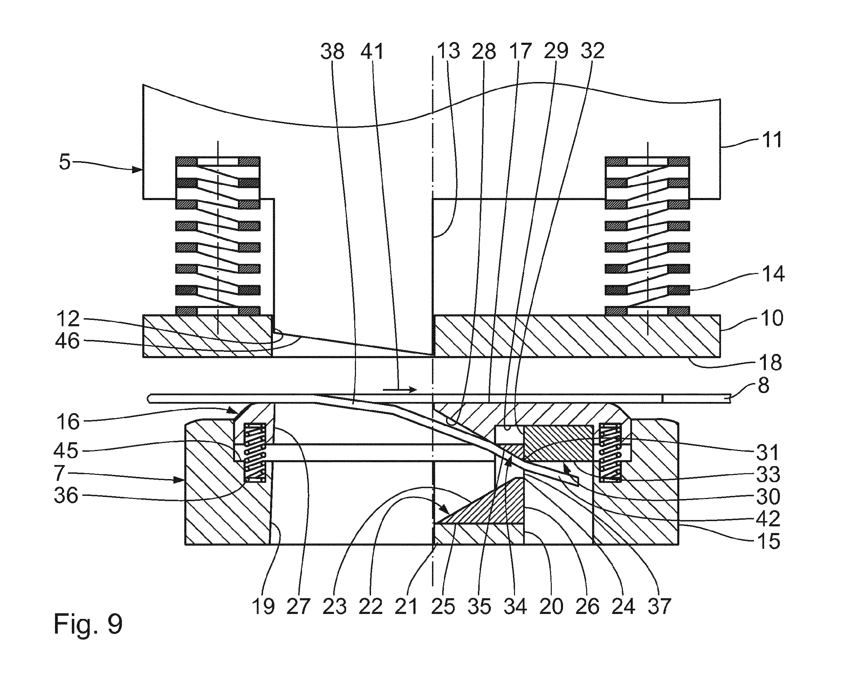

In Fig. 9 ist das Stanzwerkzeug wieder in seiner Ruhestellung. Das Werkstück 8 bzw. das Werkstückteil 38 ist weiter in der Vorschubrichtung 41 verfahren worden, so dass das Endstück 42 den Ablängspalt 37 durchsetzt und in die zweite Abführöffnung 20 ragt. Die Ablängeinrichtung befindet sich in ihrer Offenstellung.

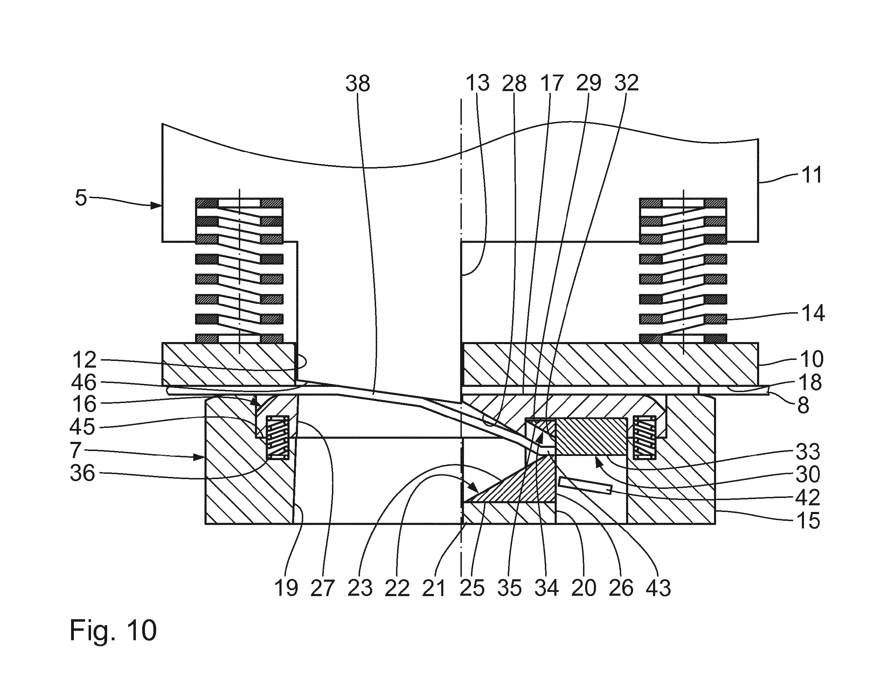

Gemäß Fig. 10 erfolgt ein weiterer Hub, durch den das Endstück 42 durch die Ablängeinrichtung gekappt worden ist und das Werkstückteil 38 weiter frei geschnitten worden ist. Der Hub entspricht im Wesentlichen dem ersten Schneidhub. Die Ablängeinrichtung befindet sich in ihrer Ablängstellung. Das Werkstückteil 38 hat nun ein neues Endstück 43. Das freie Endstück 42 wird über die zweite Abführöffnung 20 abgeführt.

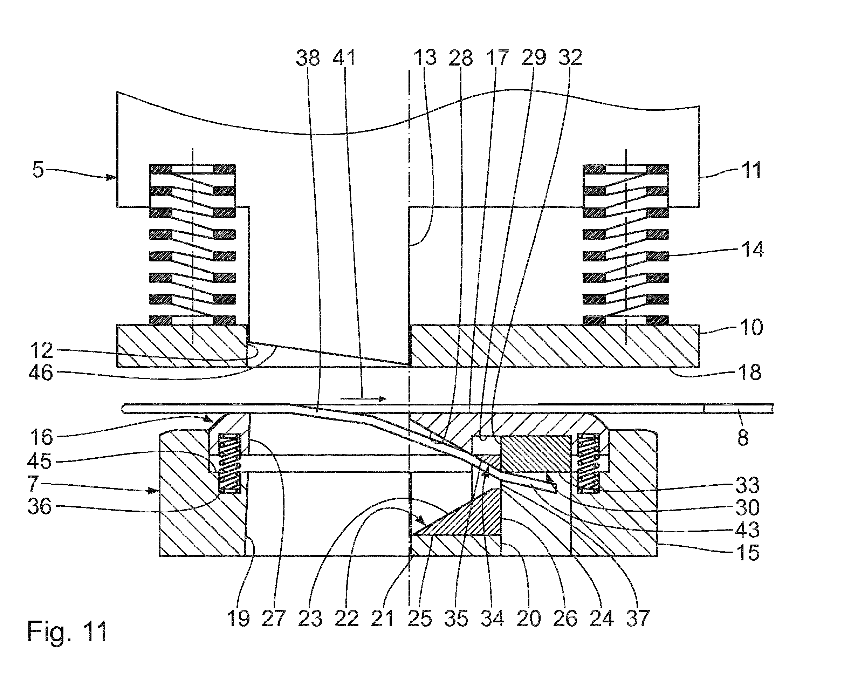

Gemäß Fig. 11 befindet sich der Stempel 5 wieder in seiner Ruhestellung. Das Werkstück 8 bzw. das Werkstückteil 38 ist weiter in der Vorschubrichtung 41 verlagert worden. Das Endstück 43 durchsetzt den Ablängspalt 37 und ragt in die zweite Abführöffnung 20. Die Ablängeinrichtung befindet sich in ihrer Offenstellung.

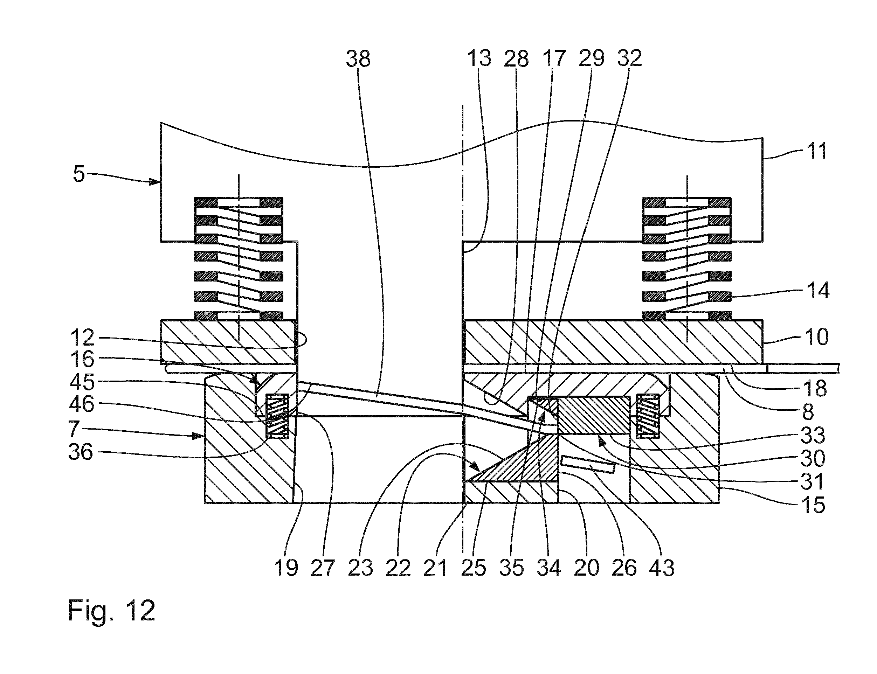

Gemäß Fig. 12 hat der Stempel 5 einen tiefen Schneidhub vorgenommen, der den "normalen" Schneidhüben ähnelt. Im Gegensatz zu den vorher beschriebenen Schneidhüben durchdringt der Stempel 5 aber vollständig das Werkstück 8.

Zum Einen wird so das Endstück 43 durch die Ablängeinrichtung abgetrennt. Zum Anderen wird das nun vollständig freie Werkstückteil 38 durch den Stempeldorn 13 von dem übrigen Werkstück 8 komplett abgetrennt. Die Anschlussverbindung wird so ebenfalls aufgelöst.

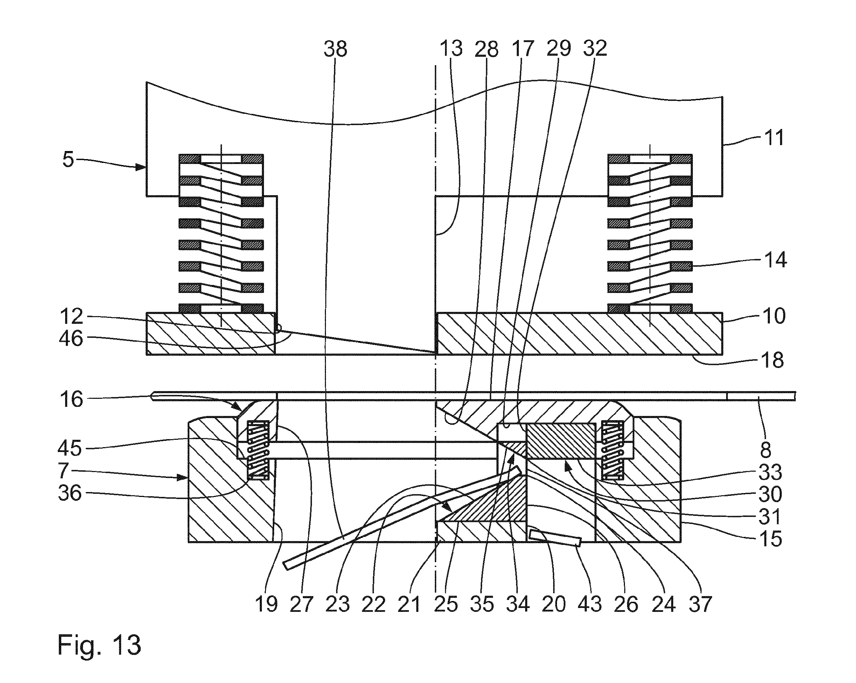

Fig. 13 zeigt die Anführung des freien Endstücks 43 über die zweite Abführöffnung 20 und die Anführung des freien Werkstückteils 38 über die erste Abführöffnung 19. Das freie Werkstückteil 38 kann an der Abführschräge 23 anfangs entlang rutschen. Der Stempel 5 befindet sich wieder in seiner Ruhestellung.

Die Angaben "stromaufwärts" und "stromabwärts" sind auf die Bewegungsrichtung des Werkstückteils 38 in Richtung auf die Ablängeinrichtung bezogen.

Der schräge Verlauf der Abführschräge 23, der Führungsschräge 28 und der Einführrampe 35 ist auf die Vorschubrichtung 41 bezogen.

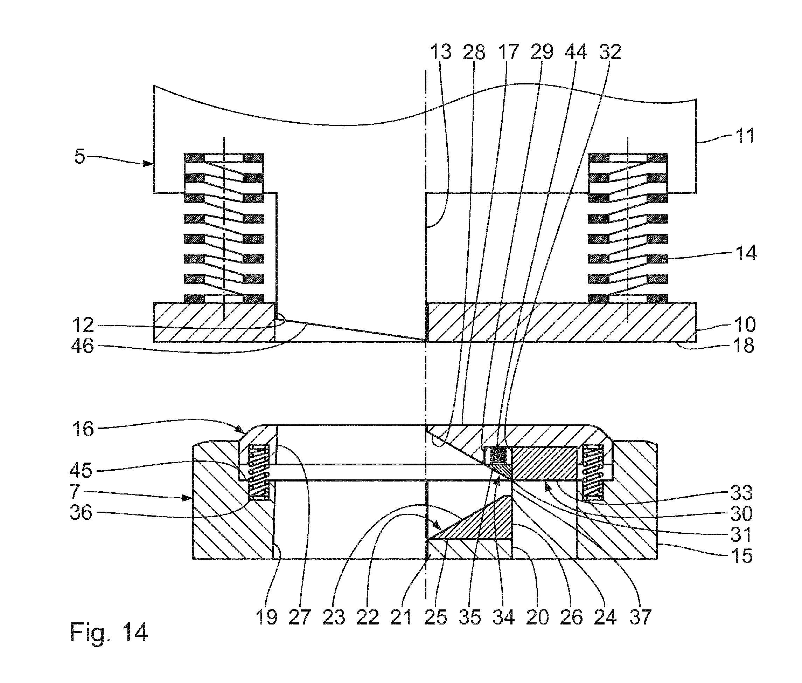

Nachfolgend wird unter Bezugnahme auf Fig. 14 eine weitere Ausführungsform der Erfindung beschrieben.

Im Gegensatz zu der vorherigen Ausführungsform, auf die hiermit verwiesen wird, ist das Einführelement 34 federbelastet. An der Unterseite 29 greift eine Schraubendruckfeder 44 an, die das Einführelement 34 in eine Stellung drückt, in der dessen Einführrampe 35 mit der Führungsschräge 28 fluchtet und an der Gegen-Ablängkante 31 endet. Das Einführelement 34 ist in Richtung auf die Tragfläche 17 hin beweglich.

Durch das beschriebene Stanzwerkzeug können Öffnungen in Werkstücken 8 erzeugt werden, die eine äußerst hohe Kantenqualität haben. Es sind sowohl Innen- als auch Außenkonturen erzeugbar.

## Patentansprüche

1. Matrize für eine Stanzvorrichtung (1), umfassend
a) einen Matrizen-Grundkörper (15),
b) einen auf dem Matrizen-Grundkörper (15) vorgesehenen Werkstück-Tragkörper (16) zum Tragen eines zu bearbeitenden Werkstücks (8), gekennzeichnet durch
c) eine Ablängeinrichtung zum Erzeugen einer Aussparung in dem Werkstück (8) durch Ablängen eines Werkstückteils (38), das mit dem restlichen Werkstück (8) über ein Anschluss-Endstück beim Ablängen in fester Verbindung steht und aus dem restlichen Werkstück (8) für das Ablängen in die Matrize gebogen ist, wobei die Ablängeinrichtung aufweist
i) ein Ablängelement (22), und
ii) ein Gegen-Ablängelement (30) zum ablängenden Wechselwirken mit dem Ablängelement (22) durch mehrere Ablänghübe, wobei das Ablängelement (22) und das Gegen-Ablängelement (30) relativ zueinander verlagerbar sind zwischen
- einer Ablängstellung, in der das Ablängelement (22) und das Gegen-Ablängelement (30) ablängend miteinander wechselwirken, und
- einer Offenstellung, in der das Ablängelement (22) und das Gegen-Ablängelement (30) voneinander beabstandet sind, und
d) eine Führungseinrichtung zum Führen des Werkstückteils (38).

2. Matrize nach Anspruch 1, **dadurch gekennzeichnet, dass** der Werkstück-Tragkörper (16) und der Matrizen-Grundkörper (15) zum Ausführen der Ablänghübe relativ zueinander entlang einer Hubachse beweglich sind.

3. Matrize nach Anspruch 1 oder 2, **dadurch gekennzeichnet, dass** das Ablängelement (22) an dem Matrizen-Grundkörper (15) angeordnet ist.

4. Matrize nach einem der vorherigen Ansprüche, **dadurch gekennzeichnet, dass** das Gegen-Ablängelement (30) an dem Werkstück-Tragkörper (16) angeordnet ist.

5. Matrize nach einem der vorherigen Ansprüche, **dadurch gekennzeichnet, dass** zwischen dem Werkstück-Tragkörper (16) und dem Matrizen-Grundkörper (15) mindestens ein Federelement (36) angeordnet ist, das die Ablängeinrichtung in ihre Offenstellung bewegt.

6. Matrize nach einem der vorherigen Ansprüche, **dadurch gekennzeichnet, dass** in dem Werkstück-Tragkörper (16) eine Durchtrittsöffnung (27) für das Werkstückteil (38) ausgebildet ist, wobei vorzugsweise der Matrizen-Grundkörper (15) eine mit der Durchtrittsöffnung (27) fluchtende, erste Abführöffnung (19) zur Abführung des freien Werkstückteils (38) aufweist.

7. Matrize nach Anspruch 6, **dadurch gekennzeichnet, dass** die Führungseinrichtung eine Führungsschräge (28) an dem Werkstück-Tragkörper (16) aufweist, wobei die Führungsschräge (28) stromaufwärts zu der Ablängeinrichtung vorgesehen ist und sich an die Durchtrittsöffnung (27) anschließt.

8. Matrize nach einem der vorherigen Ansprüche, **dadurch gekennzeichnet, dass** die Führungseinrichtung eine mit dem Matrizen-Grundkörper (15) in fester Verbindung stehende Abführschräge (23) und das Ablängelement (22) eine Ablängkante (24) hat, wobei die Abführschräge (23) stromaufwärts zu der Ablängkante (24) vorgesehen ist.

9. Matrize nach einem der vorherigen Ansprüche, **dadurch gekennzeichnet, dass** die Führungseinrichtung ein an dem Werkstück-Tragkörper (16) vorgesehenes Einführelement (34) mit einer Einführrampe (35) und das Gegen-Ablängelement (30) eine Gegen-Ablängkante (31) hat, wobei die Einführrampe (35) stromaufwärts zu der Gegen-Ablängkante (31) vorgesehen ist, wobei vorzugsweise auf das Einführelement (34) mindestens ein Federelement (44) wirkt und dieses in Richtung auf das Ablängelement (22) bewegt.

10. Matrize nach einem der vorherigen Ansprüche, **dadurch gekennzeichnet, dass** in dem Matrizen-Grundkörper (15) eine zweite Abführöffnung (20) zur Abführung abgelängter, freier Endstücke (39, 42, 43) des Werkstückteils (38) vorgesehen ist, wobei sich die zweite Abführöffnung (20) an die Ablängeinrichtung stromabwärts anschließt.

11. Stanzwerkzeug für eine Stanzvorrichtung (1), umfassend
a) eine Matrize (7) nach einem der vorherigen Ansprüche, und
b) einen Stempel (5) zum Wechselwirken mit der Matrize (7), wobei der Stempel (5) aufweist
i) einen Stempelkörper (11) mit einem Stempeldorn (13) zum Erzeugen eines Werkstückteils (38), das mit dem restlichen Werkstück (8) über ein Anschluss-Endstück beim Ablängen in fester Verbindung steht, und zum Stoßen desselben in die Matrize (7).

12. Stanzwerkzeug nach Anspruch 11, **dadurch gekennzeichnet, dass** der Stempel (5) ein Bodenelement (10) aufweist, wobei zwischen dem Bodenelement (10) und dem Stempelkörper (11) mindestens ein Federkörper (14) zum Aufbringen der zum Abschneiden eines Endstücks (43) des Werkstücks (8) erforderlichen Schneidkraft angeordnet ist, wobei der mindestens eine Federkörper (14) das Bodenelement (10) und den Stempelkörper (11) voneinander weg bewegt.

13. Stanzwerkzeug nach Anspruch 11 oder 12, **dadurch gekennzeichnet, dass** der Stempel (5) einen im Querschnitt trapezförmigen Stempeldorn (13) aufweist, wobei vorzugsweise der Stempeldorn (13) in einer Vorschubrichtung (41) eines Werkstücks (8) vorne breiter als hinten ist.

14. Verfahren zum Herausschneiden von Werkstückteilen (38) aus Werkstücken (8), umfassend die Schritte
- Bereitstellen einer Matrize nach einem der Ansprüche 1 bis 10,
- Erzeugen des Werkstückteils (38) durch mindestens einen Schneidhub eines Stempels (5), wobei das Werkstückteil (38) mit dem restlichen Werkstück (8) über ein Anschluss-Endstück beim Ablängen in fester Verbindung steht und aus dem restlichen Werkstück (8) für das Ablängen in die Matrize gebogen wird,
- Herbeiführen einer Relativbewegung zwischen dem Werkstück (8) und der Matrize (7) durch eine Vorschubeinrichtung (40) zum Einführen des Werkstückteils (38) in die Ablängeinrichtung, und
- Betätigen der Ablängeinrichtung zum Ablängen des Werkstückteils (38), wobei vorzugsweise die Betätigung der Ablängeinrichtung durch den Stempel (5) erfolgt.

15. Verfahren nach Anspruch 14, **dadurch gekennzeichnet, dass**
- zwischen dem Werkstück-Tragkörper (16) und dem Matrizen-Grundkörper (15) der Matrize (7) mindestens ein Federelement (36) angeordnet ist, das die Ablängeinrichtung in ihre Offenstellung bewegt, und
- zwischen einem Bodenelement (10) des Stempels (5) und einem Stempelkörper (11) des Stempels (5) mindestens ein Federkörper (14) zum Aufbringen einer für das Abschneiden eines Endstücks (43) eines Werkstücks (8) erforderlichen Schneidkraft angeordnet ist, wobei der mindestens eine Federkörper (14) das Bodenelement (10) und den Stempelkörper (11) voneinander weg bewegt.

## Claims

1. Die for a punching device (1), comprising
a) a die base body (15),
b) a workpiece support body (16) provided on the die base body (15) to support a workpiece (8) to be machined,
**characterized by**
c) a cutting to length mechanism for producing a recess in the workpiece (8) by cutting a workpiece part (38) to length, which is fixedly connected to the remaining workpiece (8) by means of a connection end piece during the cutting to length and is bent from the remaining workpiece (8) for the cutting to length into the die, wherein the cutting to length mechanism has
i) a cutting to length element (22), and
ii) a counter-cutting to length element (30) for the cutting to length interaction with the cutting to length element (22) by several cutting to length strokes, wherein the cutting to length element (22) and the counter-cutting to length element (30) can be displaced relative to one another between
- a cutting to length position, in which the cutting to length element (22) and the counter-cutting to length element (30) interact with one another so as to cut to length, and
- an open position, in which the cutting to length element (22) and the counter-cutting to length element (30) are spaced apart from one another, and
d) a guide mechanism for guiding the workpiece part (38).

2. Die according to claim 1, **characterised in that** the workpiece support body (16) and the die base body (15) are movable relative to one another along a stroke axis to carry out the cutting to length strokes.

3. Die according to claim 1 or 2, **characterised in that** the cutting to length element (22) is arranged on the die base body (15).

4. Die according to any one of the preceding claims, **characterised in that** the counter-cutting to length element (30) is arranged on the workpiece support body (16).

5. Die according to any one of the preceding claims, **characterised in that** at least one spring element (36), which moves the cutting to length mechanism into its open position, is arranged between the workpiece support body (16) and the die base body (15).

6. Die according to any one of the preceding claims, **characterised in that** a through-opening (27) for the workpiece part (38) is formed in the workpiece support body (16), the die base body (15) preferably having a first discharge opening (19) aligning with the through-opening (27) to discharge the free workpiece part (38).

7. Die according to claim 6, **characterised in that** the guide mechanism has a guide bevel (28) on the workpiece support body (16), the guide bevel (28) being provided upstream with respect to the cutting to length mechanism and adjoining the through-opening (27).

8. Die according to any one of the preceding claims, **characterised in that** the guide mechanism has a discharge bevel (23) fixedly connected to the die base body (15) and the cutting to length element (22) has a cutting to length edge (24), the discharge bevel (23) being provided upstream with respect to the cutting to length edge (24).

9. Die according to any one of the preceding claims, **characterised in that** the guide mechanism has an introduction element (34), which is provided on the workpiece support body (16), with an introduction ramp (35) and the counter-cutting to length element (30) has a counter-cutting to length edge (31), the introduction ramp (35) being provided upstream with respect to the counter-cutting to length edge (31), at least one spring element (44) preferably acting on the introduction element (34) and moving the latter in the direction of the cutting to length element (22).

10. Die according to any one of the preceding claims, **characterised in that** a second discharge opening (20) for discharging cut to length, free end pieces (39, 42, 43) of the workpiece part (38) is provided in the die base body (15), the second discharge opening (20) adjoining the cutting to length mechanism downstream.

11. Punching tool for a punching device (1), comprising
a) a die (7) according to any one of the preceding claims, and
b) a punch (5) for interacting with the die (7), wherein the punch (5) has
i) a punch body (11) with a punch mandrel (13) to produce a workpiece part (38), which is fixedly connected to the remaining workpiece (8) by means of a connection end piece during cutting to length, and to push the latter into the die (7).

12. Punching tool according to claim 11, **characterised in that** the punch (5) has a base element (10), at least one spring body (14) to apply the cutting force required to cut off an end piece (43) of the workpiece (8) being arranged between the base element (10) and the punch body (11), the at least one spring body (14) moving the base element (10) and the punch body (11) away from one another.

13. Punching tool according to claim 11 or 12, **characterised in that** the punch (5) has a cross-sectionally trapezoidal punch mandrel (13), the punch mandrel (13) preferably being wider at the front than at the rear in a feed direction (41) of a workpiece (8).

14. Method for cutting out workpiece parts (38) from workpieces (8), comprising the steps
- providing a die according to any one of claims 1 to 10,
- producing the workpiece part (38) by at least one cutting stroke of a punch (5), wherein the workpiece part (38) is fixedly connected to the remaining workpiece (8) by means of a connection end piece during cutting to length and is bent out of the remaining workpiece (8) for the cutting to length into the die,
- bringing about a relative movement between the workpiece (8) and the die (7) by means of a feed mechanism (40) to introduce the workpiece part (38) into the cutting to length mechanism, and
- actuating the cutting to length mechanism to cut the workpiece part (38) to length, the actuation of the cutting to length part preferably taking place by means of the punch (5).

15. Method according to claim 14, **characterised in that**
- at least one spring element (36), which moves the cutting to length mechanism into its open position, is arranged between the workpiece support body (16) and the die base body (15) of the die (7), and
- at least one spring body (14) to apply a cutting force necessary to cut off an end piece (43) of a workpiece (8) is arranged between a base element (10) of the punch (5) and a punch body (11) of the punch (5), the at least one spring body (14) moving the base element (10) and the punch body (11) away from one another.

## Revendications

1. Matrice pour un dispositif d'estampage (1), comprenant
a) un corps de base de matrice (15),
b) un corps de support de pièce à usiner (16) monté sur le corps de base de matrice (15) pour porter une pièce à usiner (8),
**caractérisée par**
c) un système de tronçonnage pour la réalisation d'une encoche dans la pièce à usiner (8) par une mise à la longueur de la partie de pièce à usiner (38) qui est solidement assemblée avec le reste de la pièce à usiner (8) par une pièce de raccordement terminale pendant la mise à la longueur et est recourbée dans la matrice à partir du reste de la pièce à usiner (8) pour la mise à la longueur, le système de tronçonnage présentant
i) un élément de tronçonnage (22), et
ii) un élément complémentaire de tronçonnage (30), pour le tronçonnage par une action conjointe avec l'élément de tronçonnage (22), par l'intermédiaire de plusieurs courses de tronçonnage, l'élément de tronçonnage (22) et l'élément complémentaire de tronçonnage (30) pouvant être déplacés l'un par rapport à l'autre entre
- une position de mise à la longueur dans laquelle l'élément de tronçonnage (22) et l'élément complémentaire de tronçonnage (30) agissent conjointement à tour de rôle pour la mise à la longueur, et
- une position ouverte dans laquelle l'élément de tronçonnage (22) et l'élément complémentaire de tronçonnage (30) sont espacés l'un de l'autre, et
d) un système de guidage pour le guidage de la partie de pièce à usiner (38).

2. Matrice selon la revendication 1, **caractérisée en ce que** le corps de support de pièce à usiner (16) et le corps de base de matrice (15) peuvent être déplacés l'un par rapport à l'autre le long d'un axe de parcours pour la réalisation d'une course de tronçonnage.

3. Matrice selon les revendications 1 ou 2 **caractérisée en ce que** l'élément de tronçonnage (22) est disposé sur le corps de base de matrice (15).

4. Matrice selon l'une des revendications précédentes, **caractérisée en ce que** l'élément complémentaire de tronçonnage (30) est disposé sur le corps de support de la pièce à usiner (16).

5. Matrice selon l'une des revendications précédentes, **caractérisée en ce qu'**au moins un élément ressort (36), qui déplace le système de tronçonnage vers sa position ouverte, est disposé entre le corps de support de pièce à usiner (16) et le corps de base de matrice (15).

6. Matrice selon l'une des revendications précédentes, **caractérisée en ce qu'**une ouverture pour le passage (27) pour la partie de pièce à usiner (38) est conçue dans le corps de support de pièce à usiner (16), le corps de base de matrice (15) présentant de préférence une première ouverture d'évacuation (19), alignée avec l'ouverture pour le passage (27), pour l'évacuation de la partie de la pièce à usiner (38) libre.

7. Matrice selon la revendication 6, **caractérisée en ce que** le système de guidage présente une partie inclinée de guidage (28) sur le corps de support de pièce à usiner (16), la partie inclinée de guidage (28) étant implantée en amont par rapport au système de tronçonnage et faisant suite à l'ouverture pour le passage (27).

8. Matrice selon l'une des revendications précédentes, **caractérisée en ce que** le système de guidage possède une partie inclinée d'évacuation (23) solidement assemblée avec le corps de base de matrice (15) et **que** l'élément de tronçonnage possède une arête de tronçonnage (24), la partie inclinée d'évacuation (23) étant implantée en amont par rapport à l'arête de tronçonnage (24).

9. Matrice selon l'une des revendications précédentes, **caractérisée en ce que** le système de guidage possède un élément d'insertion (34) implanté sur le corps de support de pièce à usiner (16) avec une rampe d'insertion (35) et **que** l'élément complémentaire de tronçonnage (30) a une arête complémentaire de tronçonnage (31), la rampe d'insertion (35) étant implantée en amont par rapport à l'arête complémentaire de tronçonnage (31), au moins un élément élastique (44) agissant de préférence sur l'élément d'insertion (34) et déplaçant celui-ci en direction de l'élément de tronçonnage (22).

10. Matrice selon l'une des revendications précédentes, **caractérisée en ce que** dans le corps de base de matrice (15) une deuxième ouverture d'évacuation (20) est prévue pour l'évacuation de pièces terminales (39, 42, 43) libres, tronçonnées, de la partie de pièce à usiner (38), la deuxième ouverture d'évacuation (20) faisant suite au système de tronçonnage en aval.

11. Outil d'estampage pour un dispositif d'estampage (1) comprenant
a) une matrice (7) selon l'une des revendications précédentes, et
b) un poinçon (5) pour une action conjointe avec la matrice (7), le poinçon (5) comprenant
i) un corps de poinçon (11) avec un mandrin de poinçon (13) pour la réalisation d'une partie de la pièce à usiner (38) qui est solidement assemblée avec le reste de la pièce à usiner (8) par une pièce de raccordement terminale pendant la mise à la longueur, et pour pousser celui-ci dans la matrice (7).

12. Outil d'estampage selon la revendication 11, **caractérisé en ce que** le poinçon (5) présente un élément de base (10), au moins un corps élastique (14) étant disposé entre l'élément de base (10) et le corps de poinçon (11) pour apporter la force de coupe nécessaire pour la coupe de la pièce terminale (43) de la pièce à usiner (8), au moins un corps élastique (14) éloignant l'élément de base (10) et le corps de poinçon (11) l'un de l'autre.

13. Outil d'estampage selon les revendications 11 ou 12, **caractérisé en ce que** le poinçon (5) présente un mandrin de poinçon (13) de forme trapézoïdale dans sa section transversale, le mandrin de poinçon (13) étant de préférence plus large devant que derrière dans une direction d'avancement (41) d'une pièce à usiner (8).

14. Procédé pour la découpe de parties de pièce à usiner (38) à partir de pièces à usiner (8), comprenant les étapes
- de mise au point d'une matrice selon l'une des revendications 1 à 10,
- de réalisation de la partie de pièce à usiner (38) par au moins une course de découpe d'un poinçon (5), la partie de pièce à usiner (38) étant solidement assemblée avec le reste de la pièce à usiner (8) par l'intermédiaire d'une pièce de raccordement terminale lors d'une mise à la longueur et étant recourbée à partir du reste de la pièce à usiner (8) pour la mise à la longueur dans la matrice,
- de réalisation d'un mouvement relatif entre la pièce à usiner (8) et la matrice (7) par un système d'avancement (40) pour l'insertion de la partie de pièce à usiner (38) dans le système de tronçonnage, et
- de mise en marche du système de tronçonnage pour la mise à la longueur de la partie de pièce à usiner (38), la mise en marche du système de tronçonnage s'effectuant de préférence par le poinçon (5).

15. Procédé selon la revendication 14, caractérisé en ce
- qu'au moins un élément élastique (36), qui déplace le système de tronçonnage dans sa position ouverte, est disposé entre le corps de support de pièce à usiner (16) et le corps de base de matrice (15) de la matrice (7), et
- qu'au moins un corps élastique (14) est disposé entre l'élément de base (10) du poinçon (5) et un corps de poinçon (11) du poinçon (5) pour l'apport de la force de coupe nécessaire pour la coupe de la pièce terminale (43) d'une pièce à usiner (8), au moins un corps élastique (14) déplaçant l'élément de base (10) et le corps de poinçon (11) l'un de l'autre.
